# FASCICULE DE BREVET EUROPEEN

(11) **EP 0 813 164 B1**
(45) Date de publication et mention de la délivrance du brevet: **26.03.2003**
(21) Numéro de dépôt: 97401345.0
(22) Date de dépôt: 13.06.1997
(51) Int. Cl.: G06K 9/00

(54) **Système et Procédé de lecture d'empreintes digitales**
Anlage und Verfahren zum Lesen von Fingerabdrücken
System and method for reading fingerprints

(30) Priorité: 14.06.1996 FR 9607419
(43) Date de publication de la demande: 17.12.1997
(73) Titulaire: Thales, 75008 Paris (FR)
(72) Inventeur: Mainguet, Jean-François, 94117 Arcueil Cedex (FR)
(74) Mandataire: Guérin, Michel

(56) Documents cités:
- FR-A- 2 674 051
- US-A- 4 933 976

## Description

L'invention concerne les systèmes de lecture d'empreintes digitales, utilisés notamment dans des dispositifs d'authentification de personnes.

Les nombreux systèmes d'authentification des personnes basés sur l'analyse des empreintes digitales, comportent au moins un capteur permettant d'obtenir une image de l'empreinte digitale de la personne à identifier. Dans les systèmes actuels, le doigt est posé sur le capteur dont la surface de lecture doit être nécessairement de l'ordre de grandeur du doigt. Le capteur est associé à un système d'analyse permettant de comparer l'image de l'empreinte digitale qu'il fournit, à une image d'une empreinte digitale de référence stockée sur un médium adéquat, par exemple une carte à puce.

Dans la plupart des cas, les capteurs fournissent une information de type analogique et le système d'analyse fait appel à un traitement numérique de l'image de l'empreinte digitale qui doit être numérisée en sortie du capteur à l'aide d'un convertisseur analogique numérique. Dans certaines réalisations, le capteur délivre directement l'image numérisée.

Les systèmes de lecture des empreintes digitales sont souvent basés sur l'utilisation de dispositifs optiques comme par exemple une caméra vidéo captant l'image du doigt, mais une simple photographie du même doigt permet d'obtenir la même image en sortie de la caméra et ainsi de frauder le système. Pour pallier à cet inconvénient, certains systèmes utilisent des prismes ou des microprismes afin de s'assurer que c'est bien un véritable doigt et non une photographie qui se trouve placé devant le capteur, la réflexion de la lumière ne s'effectuant qu'aux endroits où les sillons de l'empreinte ne touchent pas le prisme, une photographie est alors inopérante. Néanmoins les systèmes optiques ne permettent pas de déterminer si le doigt qui est placé devant le capteur est bien vivant et n'est donc pas un doigt par exemple moulé. Les systèmes optiques présentent d'autres inconvénients comme par exemple leur volume important et un coût de production élevé.

D'autres moyens ont été proposés pour réaliser des dispositifs d'authentification de personnes par les empreintes digitales, exploitant les possibilités de traitement collectif de l'industrie du semi-conducteur, donc potentiellement moins coûteux et offrant les avantages de l'intégration du capteur et de tout ou partie de la chaîne de traitement des données du dispositif d'authentification notamment la numérisation de l'image en sortie du capteur, le stockage de l'image de référence et l'authentification. Le capteur de lecture des empreintes digitales comporte une matrice d'éléments sensibles, organisée en lignes et en colonnes, fournissant un signal électrique différent selon qu'une crête du sillon de l'empreinte digitale touche ou ne touche pas un élément sensible du capteur.

Des brevets ont été déposés sur différents moyens de lecture des empreintes digitales :
- le brevet US,4,353,056, décrit un principe de lecture basé sur la variation de la capacité des éléments sensibles du capteur.

D'autres systèmes comportent des capteurs ayant des composés sensibles à la pression, à la température ou bien à la pression et à la température transformant l'information spatiale de pression et/ou de température en un signal électrique qui est ensuite collecté par un multiplexeur à semi-conducteurs, qui peut être par exemple une matrice de transfert de charges, connue sous la dénomination anglaise de "CCD", le brevet US,4,394,773, décrit un tel principe.

Les capteurs basés sur les effets piézo et/ou pyroélectrique sont les plus intéressants car ils sont sensibles à la pression et/ou à la chaleur exercée sur ses éléments sensibles, ce qui permet de déterminer, lors de la lecture de l'empreinte digitale, si le doigt est bien vivant par la chaleur propre qu'il dégage. Il est aussi possible de détecter les variations dues à la pulsation du sang dans le doigt, induisant une variation de chaleur et/ou de pression, ce qui permet d'obtenir une plus grande fiabilité dans l'authentification de l'empreinte digitale.

Ces types de capteurs, directement intégrables sur un substrat semi-conducteur ont des inconvénients qui freinent leur introduction sur le marché. La surface du capteur est nécessairement de l'ordre de grandeur d'un doigt, soit de l'ordre de plusieurs centimètres carrés à une dizaine de centimètres carrés lorsqu'on souhaite avoir la totalité de la première phalange du doigt qui, dans ce cas, doit être roulé sur le capteur afin de présenter la totalité de l'empreinte digitale sur le capteur. Ceci diminue le nombre de candidats possibles dans une tranche de silicium, les rendements de fabrication des tranches de silicium diminuent proportionnellement à leur surface augmentant considérablement le coût de fabrication.

Le signal électrique fourni par les capteurs intégrés sur un substrat semi-conducteur est fugitif et un système spécifique est nécessaire pour le maintenir dans le temps car les charges électriques sont induites par des variations des effets physiques (température, pression...) sur le capteur et en conséquence le signal à sa sortie tend à disparaître à la mise en équilibre des effets physiques. Les constantes de temps de disparition du signal sont de l'ordre de quelques millisecondes à quelques secondes dans les cas favorables.

Le résultat pratique est la production d'une série d'images à partir du moment où le doigt est posé sur le capteur. La qualité de contraste de ces images n'est pas stable et elles ont tendance à s'évanouir ce qui complique la tâche du système de reconnaissance car il doit alors analyser toutes les images produites en permanence par le capteur afin de trouver la plus correcte pour l'authentification.

Des systèmes avec une excitation extérieure au capteur ont été proposés, par exemple envoi d'un faisceau d'énergie sous forme de micro-ondes. mais ils compliquent le système et augmentent son volume et son prix.

On peut pallier la disparition transitoire de l'image de l'empreinte à l'aide d'une mémoire électronique mais ceci complique la conception du capteur et augmente son coût de fabrication car cela requiert une technologie permettant de réaliser cette mémorisation et il est très difficile de construire un système suffisamment précis, fiable et peu coûteux capable de décider quelle est la meilleure image parmi toutes celles produites par le capteur.

L'invention est définie dans la revendication de système 1 et la revendication de procédé 18.

La présente invention propose de pallier les inconvénients de l'art antérieur en proposant un système de lecture d'empreinte digitale comportant des moyens de lecture de l'empreinte digitale lorsque le doigt et un capteur appartenant aux moyens de lecture sont en contact dans un mouvement relatif de glissement du capteur et du doigt l'un par rapport à l'autre et des moyens pour reconstituer une image de l'empreinte à partir d'images partielles obtenues pendant ce mouvement.

Un glissement du doigt sur un capteur fixé sur un bâti, ou le glissement d'un capteur mobile sur un doigt fixe ou d'une façon plus générale le glissement du doigt et du capteur l'un par rapport à l'autre, stabilise la qualité de l'image fournie par le capteur. En effet au moment du glissement du doigt sur le capteur, les variations physiques au niveau de chaque élément sensible du capteur sont permanentes car les sillons de l'empreinte digitale le touchent successivement avec une vitesse du même ordre de grandeur ou plus rapide que la constante de temps caractéristique de la couche sensible du capteur. Le capteur fournit dans ces conditions une succession d'images ayant un contraste de qualité constante.

Un autre aspect de cette invention réside dans le fait que, dans la mesure où on effectue un glissement relatif du doigt sur le capteur, il est possible de réduire la taille du capteur à des dimensions inférieures à la taille du doigt Par exemple en supposant que le doigt se déplace sur le capteur dans le sens de sa longueur, la longueur du capteur peut être réduite, ne couvrant plus qu'une petite surface de l'empreinte digitale. Dans ce cas, les signaux électriques fournis par le capteur pendant le glissement relatif du doigt sur le capteur, correspondent à une succession d'images partielles de l'empreinte du doigt et dans la mesure où la vitesse relative de déplacement du doigt par rapport au capteur ne dépasse pas une certaine valeur maximale, une image fournie par le capteur à un instant donné recouvrira au moins partiellement la suivante. L'image complète de l'empreinte digitale pourra être reconstituée par un système de traitement spécifique.

La réduction de taille du capteur et donc, sa surface, aura comme conséquence une diminution importante de son coût de fabrication.

L'invention propose que le capteur appartenant aux moyens de lecture de l'empreinte digitale, soit caractérisé par le fait que la surface du capteur est plus petite que la surface de l'empreinte digitale et ne délivre que des images partielles de l'empreinte digitale complète. La reconstruction de l'image complète de l'empreinte digitale étant obtenue par la superposition d'images successives fournies par le capteur au cours de son déplacement relatif par rapport au doigt.

D'autres caractéristiques de l'invention apparaîtront à la lecture de la description détaillée des réalisations suivantes et qui est faite en référence aux dessins annexés dans lesquels :
- la figure 1 représente un vue générale du capteur d'empreinte ;
- la figure 2 montre l'utilisation du capteur d'empreinte ;
- la figure 3 représente une coupe schématique montrant la constitution du capteur ;
- la figure 4 représente le synoptique d'un exemple de réalisation d'un système de lecture d'empreintes digitales selon l'invention ;
- la figure 5 représente différentes positions relatives du capteur du doigt au moment de la lecture de l'empreinte ;
- les figures 6 et 7 représentent deux images consécutives en sortie du capteur ;
- les figures 8, 9 et 10 représentent des essais de superpositions de deux images successives en sortie du capteur ;
- les figures 11 et 12 représentent deux étapes de reconstitution de l'image complète de l'empreinte digitale.

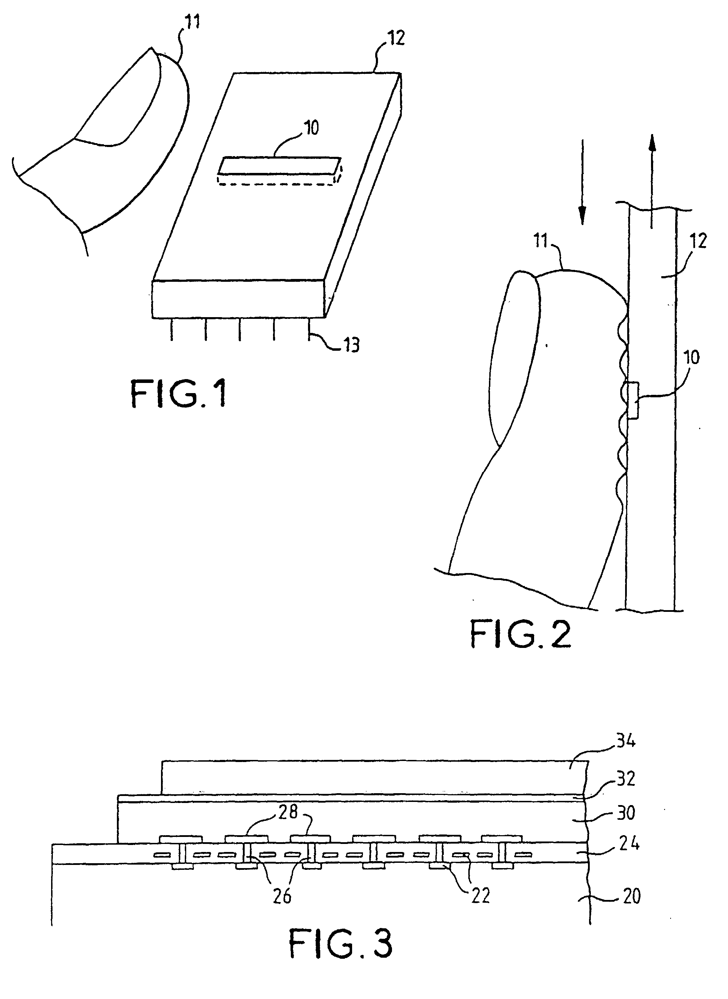

La figure 1, montre une vue générale d'un exemple de réalisation du capteur d'empreinte selon l'invention. Le capteur d'empreinte 10, est un circuit intégré ayant la forme d'une barrette de largeur sensiblement égale a celle d'un doigt 11, par exemple 1 ou 2 centimètres, mais de longueur beaucoup plus petite que sa largeur par exemple quelques millimètres, couvrant partiellement l'empreinte digitale à lire. Le capteur est contenu dans un support 12 comportant des broches de connexion extérieure 13.

Dans une réalisation, le circuit intégré est constitué d'une couche active pyro/piézo-électrique placée entre une électrode supérieure et un réseau matriciel d'électrodes inférieures. Les électrodes inférieures reposent sur un substrat semi-conducteur dans lequel est formé un circuit électronique intégré apte à traiter les charges électriques engendrées par la couche pyro/piézo-électrique sur chacune des électrodes du réseau. Ce circuit électronique intégré est relié à des broches de connexion extérieures qui peuvent transmettre des signaux électriques dont l'ensemble représente une image d'un motif de pression exercé sur la couche active. La constitution des électrodes inférieures en réseau matriciel permet de réaliser un réseau d'éléments sensibles pyro/piézo-électriques individuels même si la couche pyro/piézo-électrique est continue. Le réseau matriciel d'éléments sensibles est organisé en lignes et colonnes.

Les éléments sensibles du capteur sont généralement de forme carrée. La sensibilité des éléments sensibles est proportionnelle à leur surface. Il est possible d'augmenter la sensibilité des éléments sensibles en augmentant leur surface, par exemple, en gardant la même largeur de l'élément sensible, augmenter sa longueur dans le sens de déplacement relatif du doigt par rapport au capteur. Par exemple dans le cas d'un déplacement relatif du doigt par rapport au capteur dans le sens des colonnes de la matrice d'éléments sensibles, on pourrait pratiquement doubler leur sensibilité en réalisant des éléments sensibles de forme rectangulaire dont la longueur dans le sens des colonnes serait double de leur largeur dans le sens des lignes de la matrice d'éléments sensibles. Ceci comporte l'avantage d'augmenter la qualité de définition et de contraste des images fournies par le capteur.

La figure 2 montre le doigt 11 lorsqu'il est appuyé sur la surface active du circuit intégré à un instant donné de son déplacement relatif sur le capteur 10, un motif de pression est engendré dans la couche pyro et piézo-électrique et ce motif est détecté par le réseau matriciel. La détection se fait sous forme de mesure de variation de charges engendrées dans les différents éléments pyro/piézo-électriques du réseau. Ces variations de charges sont obtenues sur les électrodes inférieures du réseau. Les signaux électriques fournis par le capteur correspondent à une image du motif de pression et de température appliqués contre la surface active du capteur à un instant donné. Si on utilisait ces signaux pour afficher cette image à un instant donné, on observerait une image représentant une partie de l'empreinte digitale du doigt appuyé sur le capteur à un instant donné de son déplacement relatif sur le capteur.

Dans une autre réalisation, selon l'invention, les éléments sensibles de la matrice du capteur sont constitués par des éléments capacitifs permettant de capter le motif matriciel de capacité créé par les crêtes et les creux de l'empreinte digitale glissant sur la surface du capteur. Le motif matriciel de capacité est transformé par le capteur en signaux électriques qui comme dans le cas de la réalisation précédente correspondent à une partie de l'empreinte digitale à un instant donné de son déplacement relatif sur le capteur.

Afin de diminuer le coût du système, il serait possible d'utiliser un capteur comportant une seule ligne éléments sensibles et d'effectuer un déplacement relatif du doigt sensiblement perpendiculairement à la ligne d'éléments sensibles mais il faudrait connaître précisément la vitesse de déplacement relatif du doigt part rapport au capteur et à tout moment du déplacement afin de reconstituer sans déformation, l'image complète de l'empreinte digitale. Une solution pour reconstituer l'image sans déformation, consisterait à imposer la vitesse relative de déplacement du capteur par rapport au doigt, par exemple en utilisant un capteur entraîné par un moteur électrique asservi, le doigt étant fixe.

Dans un système d'authentification d'empreintes digitales à très faible coût selon l'invention, il serait possible d'utiliser un capteur comportant une seule ligne d'éléments sensibles et sans la connaissance ou l'imposition par le système, de la vitesse de déplacement relatif du doigt sur le capteur. En effet, bien que l'empreinte digitale ne puisse être reconstituée dans sa forme exacte, elle pourrait être authentifiée à l'aide d'un algorithme adéquat de traitement d'image.

Afin de s'affranchir de ces contraintes le capteur devra comporter plusieurs lignes d'éléments sensibles permettant de reconstituer par le système de lecture, l'image complète de l'empreinte digitale. De préférence le nombre de lignes du capteur sera le plus faible possible afin d'obtenir un capteur ayant une très faible surface et en conséquence un faible coût.

Le nombre minimum de lignes du capteur nécessaires dépend :
- de la taille des éléments sensibles du capteur (pixels)
- de la vitesse relative du doigt par rapport au capteur
- du nombre d'images par seconde que pourra délivrer le capteur car il faut impérativement un recouvrement suffisant entre deux images successives
- de l'efficacité de l'algorithme de traitement des images partielles issues du capteur, permettant la reconstitution de l'image complète de l'empreinte.

Il faut au moins une ligne de recouvrement entre deux images successives fournies par le capteur, mais pratiquement environ 5 à 6 lignes de recouvrement semblent nécessaires afin de pallier certains défauts du capteur et rendre le système plus tolérant aux pertes de qualité de l'image, sachant que la distance entre deux sillons consécutifs de l'empreinte digitale est en moyenne de l'ordre de 120 micromètres. Le capteur doit comporter un nombre de lignes suffisant afin de pouvoir reconstruire sans trop de difficultés l'image complète de l'empreinte digitale. Le nombre de lignes peut être établit de la façon suivante :

Considérons que la distance entre deux éléments sensibles consécutifs est de 50 micromètres et que la largeur de la zone active du capteur est de 2,5 centimètres, chaque ligne du capteur comportera 500 éléments sensibles. En prenant un capteur comportant 40 lignes (soit une longueur du capteur de 2 millimètres) le nombre total d'éléments sensibles à lire sera de 20000. Dans le cas où la vitesse de lecture est limitée à 1 million d'éléments sensibles par seconde, le capteur fournira 50 images par seconde. En prenant un recouvrement sur la longueur des images de 10 éléments sensibles, soit de 10 lignes, le déplacement maximum du doigt entre deux images consécutives ne doit pas dépasser 30 éléments sensibles entre deux images, soit 1500 micromètres en 20 millisecondes, soit 7,5 centimètres par seconde, ce qui est une vitesse raisonnable de déplacement relatif du doigt par rapport au capteur.

La réduction du nombre de lignes du capteur, permet d'obtenir plus d'image par seconde pour une même vitesse de lecture d'éléments sensibles par seconde, mais la distance maximum pouvant être parcourue par le doigt sur le capteur est réduite d'autant. Il faut plutôt augmenter la fréquence de lecture des éléments sensibles pour pouvoir accepter des vitesses de déplacement relatif du doigt sur le capteur plus importantes.

Les dimensions de la surface active du capteur seront comprises de préférence entre 1 cm et 2,5 cm pour la largeur et inférieures à 5 millimètres pour la longueur.

On pourrait envisager, bien que cela rende le traitement électronique plus complexe, un capteur de largeur bien inférieure à celle d'un doigt, à condition de prévoir plusieurs passages du doigt sur le capteur (ou du capteur sur le doigt) pour couvrir toute la surface désirée de l'empreinte à lire. Ceci permet d'avoir un capteur de petite dimension, donc moins coûteux à réaliser.

Les système d'authentification des personnes par les empreintes digitales comportent toujours en pratique un traitement numérique de l'image pour authentifier l'individu. La réalisation la plus simple consiste à incorporer l'algorithme de reconstruction de l'image dans le système comportant l'algorithme d'authentification.

Une solution possible est l'intégration sur le même substrat du capteur, du convertisseur analogique numérique qui digitalise l'image et envoie les données résultantes à un microprocesseur comportant une mémoire morte contenant l'algorithme de reconstruction et une mémoire vive contenant l'image reconstruite en fin de traitement. Cette image sera ensuite traitée dans un dispositif du système effectuant l'identification.

Ces différentes solutions proposées ne sont pas limitatives et d'autres solutions d'intégration sont possibles suivant les possibilités offertes par les technologies des semi-conducteurs.

La figure 3 représente schématiquement un exemple d'un circuit intégré constituant le capteur d'empreinte selon l'invention.

Le circuit intégré est formé sur un substrat semi-conducteur 20, qui est en principe un substrat de silicium. Dans ce substrat sont formés des circuits de lecture et de traitement de charges électriques 22 ces circuits sont par exemple des circuits CCD (circuits à transfert de charges), ou des circuits C-MOS. Ils sont réalisés selon les technologies courantes de fabrication de circuits intégrés au silicium. Les circuits sont constitués en réseau, en fonction du motif matriciel d'éléments piézo-électriques qui sera formé ultérieurement.

L'ensemble des circuits de lecture et de traitement de signaux est en principe recouvert d'une couche de planarisation 24, qui est par exemple une couche de polyimide de quelques micromètres d'épaisseur, déposée à la tournette.

La couche de planarisation 24 est gravée périodiquement, en fonction du motif d'éléments piézo-électriques qui va être formé, pour ouvrir des ouvertures 26 par lesquelles les éléments piézo-électriques individuels pourront être reliés chacun à un circuit de lecture de charges respectif du substrat silicium.

Un réseau d'électrodes inférieures 28 est formé sur la couche de planarisation ; chaque électrode vient en contact, à travers une ouverture 26 respective, avec un circuit de lecture de charge du substrat de silicium.

Une couche active piézo-électrique 30 est déposée sur le substrat ainsi recouvert d'un réseau d'électrodes. Cette couche est de préférence une couche de matériau polymère pyroélectrique et elle peut être continue. Cette couche est relativement souple (matière plastique polymère). Elle est recouverte d'une électrode supérieure 32 continue. On définit ainsi un réseau d'éléments piézo-électriques constitués chacun par une électrode inférieure 28, la portion de couche piézo-électrique 30 située juste au-dessus d'elle et la portion d'électrode supérieure 32 qui la recouvre. Les charges électriques engendrées par une pression localement exercée sur cet élément sont lues par le circuit de lecture correspondant, relié électriquement à l'électrode inférieure correspondante à travers une ouverture 26.

Une couche de protection 34, par exemple une couche de polyimide d'une dizaine de micromètres d'épaisseur, est déposée au-dessus de l'électrode supérieure 32. Cette couche de protection doit être à la fois assez rigide et assez souple pour transmettre verticalement sans modification le motif de pressions qui est exercé sur elle (le doigt étant appuyé directement sur cette couche).

Les circuits électroniques du substrat 20 sont raccordés à l'extérieur par l'intermédiaire de plots de contacts non représentés situés à la surface du circuit.

Le matériau de la couche pyro/piézo-électrique peut être par exemple un polyfluorure de vinylidène (PVDF), un polyfluorure de vinylidène-trifluoroéthylène (PVDF-TrFE), un polycyanure de vinylidène-vinylacétate (PVDCN-VAc), un polycyanure de vinylidène-fluorure de vinylidène (PVDCN-VDF). D'autres couches sensibles sont possibles, en particulier toutes celles qui produisent des charges électriques en fonction d'un paramètre physique.

Dans le cas des copolymères précédemment cités, le principal effet utilisé est la génération des charges électriques induites par la variation de température et/ou de pression du copolymère. Cette variation de température et/ou de pression est induite par le contact des crêtes des sillons de l'empreinte digitale avec la surface du capteur, en général constitué d'une fine couche de protection de quelques dizaines de micromètres évitant une dissipation thermique latérale trop importante, déposée sur un réseau d'électrodes connectés au circuit de multiplexage.

Nous allons décrire par la suite un exemple de réalisation d'un système selon l'invention comportant un capteur ayant une surface bien inférieure à la surface de l'empreinte digitale à lire et dont la longueur (nombre de lignes de matrice du capteur) est bien plus petite que sa largeur (longueur des lignes du capteur), la largeur du capteur dans cet exemple étant au moins égale à la largeur du doigt dont on veut lire l'empreinte digitale.

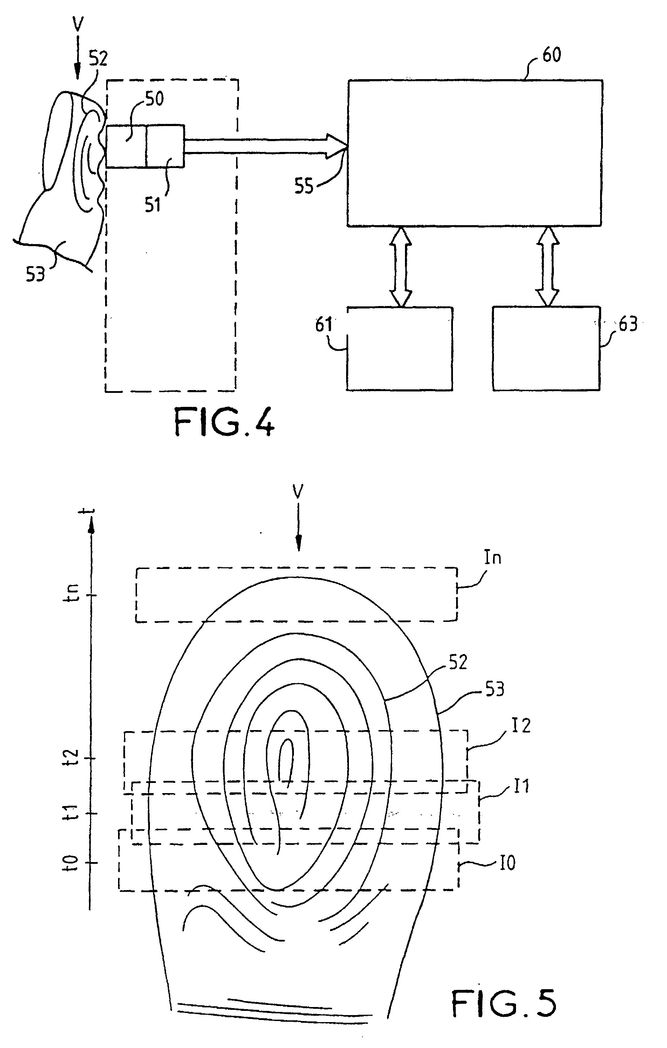

La figure 4, représente un synoptique d'un système comportant un capteur 50 sur un substrat semi-conducteur, ayant un convertisseur analogique/numérique 51, intégré sur le même substrat et fournissant des images partielles numérisées de l'empreinte digitale 52, par exemple d'un doigt 53, à des instants successifs au cours d'un déplacement relatif du doigt 53 sur le capteur 50. Les images partielles numérisées sont présentées aux entrées de traitement 55 d'un microprocesseur 60 comportant une mémoire vive 61 et une mémoire morte 63 contenant un algorithme de traitement permettant la reconstruction de l'image complète de l'empreinte digitale 52 du doigt 53 et l'authentification de cette empreinte.

Nous allons décrire le fonctionnement du système représenté par le synoptique de la figure 4 :

Considérons le doigt 53 et son empreinte digitale 52, représentés à la figure 5. Le doigt 53, glisse sur le capteur perpendiculairement aux lignes de la matrice d'éléments sensibles du capteur, selon la direction V. Les différentes positions aux instants t0, t1, t2, ....tn de la fenêtre active du capteur au cours de son déplacement relatif par rapport au doigt 53, sont représentées en pointillés. Le capteur génère les, images successives I0, I1,I2,....In, aux instants respectifs t0,t1,t2,.....tn et la vitesse de déplacement relative du doigt sur le capteur est telle qu'au moins une image recouvre partiellement la suivante. Par exemple 10 recouvre partiellement I1, I1 recouvre partiellement I2 et ainsi de suite.

Pour rendre plus claire la représentation du mouvement relatif du doigt 53 par rapport au capteur 50, sur la figure 5, le doigt 53 est représenté fixe et le capteur 50 mobile par rapport au doigt, le fonctionnement du système serait le même dans le cas d'un doigt mobile et un capteur fixe ou d'une façon plus générale un doigt mobile glissant sur un capteur mobile. Le paramètre à considérer étant le mouvement relatif du doigt et du capteur, l'un par rapport à l'autre, dans une direction sensiblement perpendiculaire à la largeur du capteur.

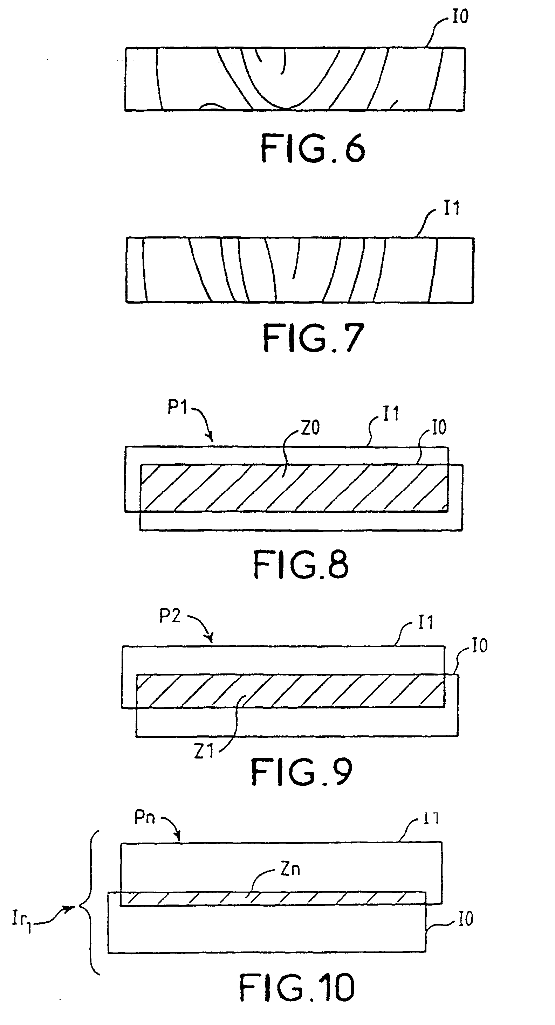

Considérons l'instant initial t0 comme étant l'instant de lecture de la première image partielle I0 de l'empreinte digitale 52. La figure 6 montre la première image partielle I0 fournie par le capteur à l'instant t0 et la figure 7 la deuxième l'image partielle I1 fournie par le capteur à l'instant suivant t1, de l'empreinte digitale 52.

Les images I0,I1,I2,.....In, sont transmises aux entrées de traitement 53 du microprocesseur 60 et stockées dans la mémoire vive 61. L'algorithme situé dans la mémoire morte 63 effectue des traitements des images stockées dans la mémoire vive 61 consistant à essayer successivement tous les recouvrements possibles entre les images I0 et I1 et d'affecter à chaque essai un coefficient de corrélation. Le meilleur coefficient de corrélation, indiquera au système la position de recouvrement optimum des deux images I0 et I1 et l'opération sera recommencée avec l'image suivante I2 fournie par le capteur 50 au microprocesseur 60 et ainsi de suite jusqu'à la reconstitution complète de l'empreinte digitale.

Différentes stratégies de corrélation peuvent être utilisées afin de reconstituer l'image complète de l'empreinte digitale à partir des images partielles successives de cette même empreinte. Par exemple, une stratégie de corrélation consiste à comparer les niveaux de tous les éléments sensibles de chacune des deux premières images I0 et I1 successives pour chaque cas de recouvrement possible de deux images.

La figure 8 montre un premier essai effectué par l'algorithme de traitement du système dans une première position P1 de superposition des deux images I0 et I1, sur une zone Z0 commune aux deux images. Le système de traitement compare les niveaux de éléments sensibles de chaque image I0 et I1 situés aux mêmes points de la zone commune Z0 et si le nombre d'éléments sensibles dont les niveaux sensiblement identiques est inférieur à une valeur prédéterminée, le système modifie la position de superposition des deux images vers une position suivante P2 (représentée à la figure 9) correspondant à une nouvelle zone de superposition Z1 des images I0 et I1 et le système effectue une nouvelle comparaison des niveaux des éléments sensibles des deux images I0 et I1 dans la zone Z1 et ainsi de suite pour des positions suivantes P3,....Pn des deux images (représentée à la figure 10) jusqu'à ce que le nombre d'éléments sensibles de niveau sensiblement identiques situées aux mêmes points dans une zone de recouvrement commune Zn des deux images I0 et I1 soit supérieur à une valeur prédéterminée correspondant une identité probable des zones Zn des images respectives I0 et I1, dans la position Pn.

Une image résultante Ir1, représentée à la figure 10, des deux images I0 et I1 pourrait être une image issue d'une pondération entre les deux images I0 et I1 dans leur position de recouvrement optimum Pn, permettant d'améliorer la qualité de l'image résultante de superposition. L'image Ir1 est gardée dans la mémoire vive du microprocesseur pour la suite du traitement.

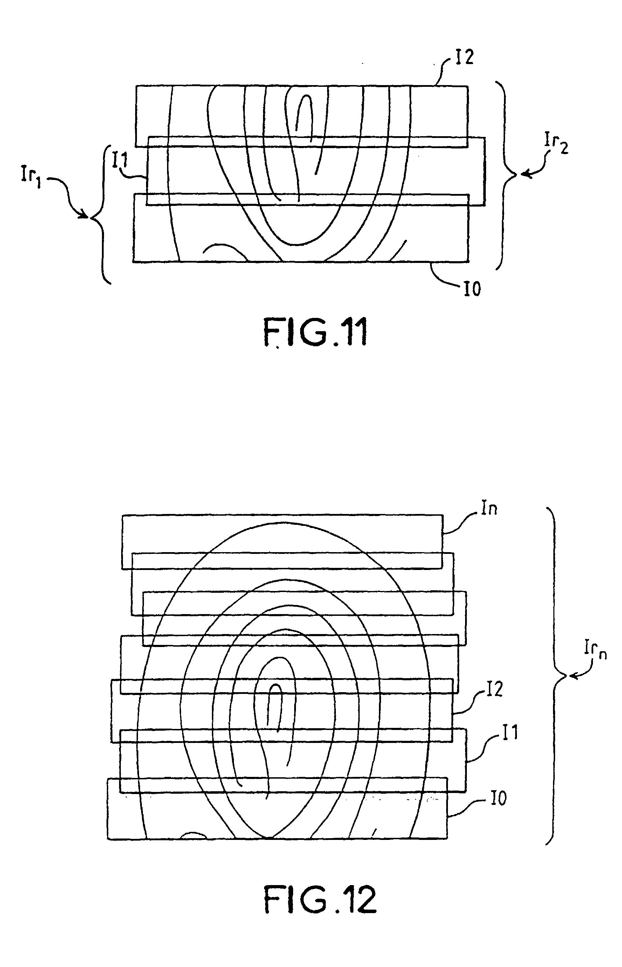

L'image suivante I2 représentée à la figure 11 à l'instant t2 en sortie de capteur 50 est transmise au microprocesseur 60 qui est à son tour comparée à l'image résultante Ir1 de la même façon que précédemment permettant d'obtenir une image Ir2 , représentée à la figure 11, résultant de la superposition de I0, I1 et I2 dans leur position optimum de recouvrement. Le processus se répète de la même façon jusqu'à l'obtention de l'image complète Irn de l'empreinte digitale 52, représentée à la figure 12.

L'algorithme de traitement du système, pourra tenir compte des résultats précédents à une nouvelle recherche de superposition optimale entre deux images successives pour prédire quelle sera la position de recouvrement la plus probable pour l'image suivante par le fait que la probabilité que le déplacement relatif du doigt par rapport au capteur soit sensiblement constant est très élevée. Ceci accélère notablement la vitesse de traitement et de reconstruction de l'image complète Irn de l'empreinte digitale en évitant des calculs inutiles.

L'exemple de reconstruction de l'image complète n'est pas limitatif et d'autres stratégies de reconstruction de l'empreinte digitale complète, peuvent être envisagées.

En particulier, dans ce qui précède on a considéré pour simplifier que l'image de l'empreinte digitale était reconstituée point par point à partir d'images partielles également obtenues point par point. Mais, étant donné que ces images doivent servir ultérieurement à une identification et que cette identification sera en général effectuée par des algorithmes de reconnaissance de forme qui peuvent utiliser des traitements d'extraction de contours, de vectorisation de ces contours, etc..., on peut également envisager que la reconstitution d'image soit directement effectuée sous forme d'ensembles de lignes de contours ou de vecteurs représentant ces contours. L'image utile d'une empreinte digitale est en effet un ensemble de contours correspondant aux crêtes des sillons de cette empreinte. Pour l'authentification, on comparera les ensembles de contours détectés à des ensembles de contour préenregistrés correspondant à un individu à authentifier. Les ensembles de contours pourront alors être stockés sous forme de tables de vecteurs décrivant ces contours.

On peut donc effectuer un traitement d'extraction de contours et/ou une vectorisation directement sur une image partielle, et effectuer ensuite des corrélations sur les contours ou vecteurs d'images partielles successifs pour regrouper les images partielles et établir une image complète directement sous forme d'ensembles de contours ou ensembles de vecteurs.

Cette solution permet d'éviter une reconstitution d'image point par point alors que cette image devra de toutes façons être transformée en ensemble de contours.

Dans d'autre réalisations, la largeur du capteur peut être inférieure à la largeur du doigt, diminuant ainsi encore sa surface, il suffira de balayer la totalité de l'empreinte digitale avec une vitesse adéquate, le système effectuant la reconstitution de l'image complète.

## Revendications

1. Système de lecture d'une empreinte digitale **caractérisé en ce qu'**il comporte des moyens de lecture de l'empreinte digitale lorsque le doigt (11,53) et un capteur (10,50) appartenant aux moyens de lecture sont en contact et dans un mouvement relatif de glissement du capteur (10,50) et du doigt (11,53) l'un par rapport à l'autre et des moyens pour reconstituer une image de l'empreinte (52) par superposition d'images partielles (I0,I1,I2,....In) successives obtenues pendant ce mouvement, la surface du capteur étant plus petite que la surface de l'empreinte digitale de manière que le capteur ne délivre que des images partielles de l'empreinte digitale complète.

2. Système de lecture d'empreinte digitale selon la revendication 1, **caractérisé en ce que** le capteur (10,50) est fixé sur un bâti, le mouvement relatif du doigt (11,53) par rapport au capteur étant effectué par glissement du doigt sur le capteur.

3. Système de lecture d'empreinte digitale selon la revendication 1, **caractérisé en ce que** des moyens sont prévus pour déplacer le capteur par rapport à une surface sur laquelle peut être posé un doigt, le mouvement relatif du doigt par rapport au capteur résultant du glissement du capteur par rapport au doigt.

4. Système de lecture d'empreinte digitale selon l'une quelconque des revendications 1 à 3, **caractérisé en ce que** le capteur (10,50) est un circuit intégré comportant une matrice d'éléments sensibles intégrés sur un substrat (20) semi-conducteur dans lequel est intégré un multiplexeur permettant de mesurer individuellement un signal engendré dans la couche active du capteur lors du déplacement relatif du doigt et du capteur, l'un par rapport à l'autre.

5. Système de lecture d'empreinte digitale selon l'une quelconque des revendications 1 à 5, **caractérisé en ce que** le capteur comporte une couche active (30) sensible à la pression et/ou à la température.

6. Système de lecture d'empreinte digitale selon la revendication 5, **caractérisé en ce que** la couche active (30) du circuit intégré est une couche pyro/piézo-électrique permettant de capter un motif matriciel de pression et/ou de température créé par l'empreinte digitale.

7. Système de lecture d'empreinte digitale selon l'une quelconque des revendications 1 à 4, **caractérisé en ce que** les éléments sensibles du capteur sont constitués par des éléments capacitifs permettant de capter le motif matriciel de capacité créé par les sillons du doigt.

8. Système de lecture d'empreinte digitale selon l'une quelconque des revendications 4 à 7, **caractérisé en ce que** l'élément sensible du capteur est de forme rectangulaire.

9. Système de lecture d'empreinte digitale selon l'une quelconque des revendications 1 à 8, **caractérisé par le fait que** la surface du Capteur est plus petite que la surface de l'empreinte digitale et ne délivre que des images partielles de l'empreinte digitale complète.

10. Système de lecture d'empreinte digitale selon l'une quelconque des revendications 1 à 9, **caractérisé en ce que** le capteur se présente sous forme d'une barrette de longueur beaucoup plus petite que sa largeur.

11. Système de lecture d'empreinte digitale selon la revendication 10, **caractérisé en ce que** la largeur de la barrette est sensiblement égale à celle d'un doigt.

12. Système de lecture d'empreinte digitale selon l'une des revendications 10 et 11, **caractérisé en ce que** le capteur a une surface active dont la largeur est comprise entre environ 1cm et 2,5 centimètres et sa longueur inférieure à 5 millimètres.

13. Système de lecture d'empreinte digitale selon l'une quelconque des revendications 1 à 12, **caractérisé en ce que** le capteur comporte une seule ligne d'éléments sensibles.

14. Système de lecture d'empreinte digitale selon l'un quelconque des revendications 1 à 13, **caractérisé en ce qu'**il comporte, pour la reconstruction d'une image d'empreinte (52), un circuit électronique avec un microprocesseur (60), une mémoire morte (63) programmée avec un algorithme permettant de reconstruire l'image complète de l'empreinte et l'identification de la personne et une mémoire vive (61).

15. Système de lecture d'empreinte selon l'une des revendications 1 à 14, **caractérisé en ce qu'**il comporte des moyens de traitement d'images partielles fournies par le capteur, permettant notamment de fournir des contours de lignes de crête d'empreintes digitales, les moyens de reconstitution d'image établissant à partir de ces contours une image globale d'empreinte sous forme de contours.

16. Système de lecture d'empreinte digitale selon la revendication 15, **caractérisé en ce que** les moyens de traitement d'images partielles tiennent compte des résultats précédents à une nouvelle recherche de superposition optimale entre deux images successives pour prédire quelle sera la position de recouvrement la plus probable pour l'image suivante par le fait que la probabilité que le déplacement relatif du doigt par rapport au capteur soit sensiblement constant, est très élevée.

17. Système de lecture d'empreinte digitale selon l'une des revendications 1 à 8, **caractérisé en ce que** le capteur (10,50) comporte une surface active et une matrice de plusieurs lignes d'éléments sensibles pour générer une série d'images (I0,I1,I2,....In), successives partielles se recouvrant, du doigt (11, 53) placé en contact avec cette surface active lors du mouvement relatif de glissement du capteur et du doigt en contact entre la surface active et le doigt, cette surface active étant plus petite que la surface de l'empreinte digitale (52) à lire, les moyens de reconstruction comportant des moyens de corrélation des images partielles successives de recouvrement.

18. Procédé de lecture d'une empreinte digitale consistant à,
- obtenir une série d'images partielles de l'empreinte digitale (52) lors d'un mouvement relatif de glissement du capteur (50) et du doigt (53) en contact, le doigt étant placé en contact direct avec une surface active du capteur, le capteur ayant une surface active plus petite que la surface de l'empreinte digitale à lire, la surface active ayant plusieurs lignes d'éléments sensibles, chaque image partielle recouvrant l'image partielle précédente et
- reconstruire une image globale par corrélation des images partielles se recouvrant.

## Patentansprüche

1. System zum Lesen eines Fingerabdrucks, **dadurch gekennzeichnet, daß** es Mittel zum Lesen des Fingerabdrucks, wenn der Finger (11, 53) und eine zu den Lesemitteln gehörende Sonde (10, 50) sich berühren und sich die Sonde (10, 50) und der Finger (11, 53) in einer relativen Gleitbewegung zueinander befinden, und Mittel aufweist, um ein Bild des Fingerabdrucks (52) durch Überlappung von aufeinanderfolgend während dieser Bewegung erhaltenen Teilbildern (I0, I1, I2, ..., In) zu rekonstruieren, wobei die Fläche der Sonde kleiner als die Oberfläche des Fingerabdrucks ist, sodaß die Sonde nur Teilbilder des vollständigen Fingerabdrucks liefert.

2. System zum Lesen eines Fingerabdrucks nach Anspruch 1, **dadurch gekennzeichnet, daß** die Sonde (10, 50) in einem Gehäuse fest angeordnet ist und daß die Relativbewegung des Fingers (11, 53) bezüglich der Sonde sich ergibt, wenn der Finger über die Sonde gleitet.

3. System zum Lesen eines Fingerabdrucks nach Anspruch 1, **dadurch gekennzeichnet, daß** Mittel vorgesehen sind, um die Sonde bezüglich einer Fläche zu verschieben, auf die ein Finger gelegt werden kann, wobei die Relativbewegung des Fingers bezüglich der Sonde aus der Verschiebung der Sonde bezüglich des Fingers resultiert.

4. System zum Lesen eines Fingerabdrucks nach einem beliebigen der Ansprüche 1 bis 3, **dadurch gekennzeichnet, daß** die Sonde (10, 50) eine integrierte Schaltung mit einer Matrix von empfindlichen Elementen ist, die auf einem Halbleitersubstrat (20) integriert ist, wobei in diesem Substrat ein Multiplexer integriert ist, der individuell die Messung eines Signals ermöglicht, das in der aktiven Schicht der Sonde bei der Relativverschiebung des Fingers bezüglich der Sonde erzeugt wird.

5. System zum Lesen eines Fingerabdrucks nach einem beliebigen der Ansprüche 1 bis 4, **dadurch gekennzeichnet, daß** die Sonde eine aktive Schicht (30) enthält, die auf Druck und/oder Temperatur anspricht.

6. System zum Lesen eines Fingerabdrucks nach Anspruch 5, **dadurch gekennzeichnet, daß** die aktive Schicht (30) der integrierten Schaltung eine pyro/piezoelektrische Schicht ist, die ein matrixförmiges Motiv des Drucks und/oder der Temperatur erfassen kann, das vom Fingerabdruck erzeugt wird.

7. System zum Lesen eines Fingerabdrucks nach einem beliebigen der Ansprüche 1 bis 4, **dadurch gekennzeichnet, daß** die empfindlichen Elemente von kapazitiven Elementen gebildet werden, die das matrixartige Kapazitätsmotiv erfassen können, das von den Rillen des Fingers erzeugt wird.

8. System zum Lesen eines Fingerabdrucks nach einem beliebigen der Ansprüche 4 bis 7, **dadurch gekennzeichnet, daß** das empfindliche Element der Sonde rechteckförmig ist.

9. System zum Lesen eines Fingerabdrucks nach einem beliebigen der Ansprüche 1 bis 8, **dadurch gekennzeichnet, daß** die Fläche der Sonde kleiner als die Fläche des Fingerabdrucks ist und nur Teilbilder des vollständigen Fingerabdrucks liefert.

10. System zum Lesen eines Fingerabdrucks nach einem beliebigen der Ansprüche 1 bis 9, **dadurch gekennzeichnet, daß** die Sonde die Form einer Leiste einer Länge hat, die wesentlich geringer ist als ihre Breite.

11. System zum Lesen eines Fingerabdrucks nach Anspruch 10, **dadurch gekennzeichnet, daß** die Breite der Leiste im wesentlichen der eines Fingers gleicht.

12. System zum Lesen eines Fingerabdrucks nach einem beliebigen der Ansprüche 10 und 11, **dadurch gekennzeichnet, daß** die Sonde eine aktive Fläche besitzt, deren Breite zwischen etwa 1 cm und 2,5 cm und dessen Länge geringer als 5 mm ist.

13. System zum Lesen eines Fingerabdrucks nach einem beliebigen der Ansprüche 1 bis 12, **dadurch gekennzeichnet, daß** die Sonde nur eine Zeile von empfindlichen Elementen besitzt.

14. System zum Lesen eines Fingerabdrucks nach einem beliebigen der Ansprüche 1 bis 13, **dadurch gekennzeichnet, daß** es für die Rekonstruktion eines Bilds (52) eines Abdrucks eine elektronische Schaltung mit einem Mikroprozessor (60), einem programmierten Festwertspeicher (63), der einen Algorithmus zur Rekonstruktion eines vollständigen Bilds des Abdrucks und zur Identifizierung der Person enthält, und einen Arbeitsspeicher (61) aufweist.

15. System zum Lesen eines Fingerabdrucks nach einem der Ansprüche 1 bis 14, **dadurch gekennzeichnet, daß** es Mittel zur Verarbeitung von von der Sonde gelieferten Teilbildern enthält, die insbesondere Umrisse von Linien der Rillenränder von Fingerabdrücken liefern können, wobei die Mittel zur Rekonstruktion des Bilds ausgehend von diesen Umrissen ein globales Bild des Fingerabdrucks in Form von Umrissen erstellt.

16. System zum Lesen eines Fingerabdrucks nach Anspruch 15, **dadurch gekennzeichnet, daß** die Mittel zur Verarbeitung von Teilbildern bereits früher erzielte Ergebnisse bei einer neuen Suche nach optimaler Überlappung zwischen zwei aufeinanderfolgenden Bildern berücksichtigen, um vorherzusagen, welche Überlappungsstellung für das nächste Bild aufgrund der Tatsache am wahrscheinlichsten ist, daß die Wahrscheinlichkeit sehr hoch ist, daß die Relativverschiebung des Fingers bezüglich der Sonde im wesentlichen konstant verläuft.

17. System zum Lesen eines Fingerabdrucks nach einem der Ansprüche 1 bis 8, **dadurch gekennzeichnet, daß** die Sonde (10, 50) eine aktive Fläche und eine Matrix aus mehreren Zeilen empfindlicher Elemente besitzt, um eine Reihe von aufeinanderfolgenden und sich überlappenden Teilbildern (I0, I1, I2, ..., In) des Fingers (11, 53) zu erzeugen, der diese aktive Fläche während der Relativ-Gleitbewegung der Sonde bezüglich des Fingers berührt, wobei diese aktive Fläche kleiner als die Fläche des zu lesenden Fingerabdrucks (52) ist und die Rekonstruktionsmittel Mittel zur Korrelation der aufeinanderfolgenden und sich überlappenden Teilbilder enthält.

18. Verfahren zum Lesen eines Fingerabdrucks, das darin besteht,
- eine Reihe von Teilbildern des Fingerabdrucks (52) während einer Relativ-Bewegung der Sonde (50) und des diese berührenden Fingers (53) zu erhalten, wobei der Finger in direktem Kontakt mit der aktiven Fläche der Sonde steht und die Sonde ein kleinere aktive Fläche als die Fläche des zu lesenden Fingerabdrucks besitzt und wobei die aktive Fläche mehrere Zeilen von empfindlichen Elementen enthält und jedes Teilbild das vorausgehende Teilbild überlappt,
- und ein globales Bild durch Korrelation der sich überlappenden Teilbilder zu rekonstruieren.

## Claims

1. Fingerprint-reading system **characterized in that** it comprises means for reading the fingerprint when the finger (11, 53) and a sensor (10, 50) belonging to the reading means are in contact, and in a relative motion of sliding of the sensor (10, 50) and the finger (11,53) with respect to each other and means to reconstruct an image of the print (52) by superposition of successive partial images (I0, I1, 12, ... In) obtained during this motion, the surface. of the sensor being smaller than the surface of the fingerprint so that the sensor delivers only partial images of the complete fingerprint.

2. Fingerprint-reading system according to Claim 1, **characterized in that** the sensor (10, 50) is fixed to a frame, the relative motion of the finger (11, 53) with respect to the sensor being effected by the sliding of the finger on the sensor.

3. Fingerprint-reading system according to Claim 1, **characterized in that** means are provided to shift the sensor with respect to a surface on which a finger may be placed the relative motion of the finger with respect to the sensor resulting from the sliding of the sensor with respect to the finger.

4. Fingerprint-reading system according to any one of Claims 1 to 3, **characterized in that** the sensor (10, 50) is an integrated circuit comprising a matrix of sensitive elements integrated into a semiconductor substrate (20) into which there is integrated a multiplexer enabling the individual measurement of a signal generated in the active layer of the sensor during the relative shift of the finger and the sensor with respeact to each other.

5. Fingerprint-reading system according to any one of Claims 1 to 4, **characterized in that** the sensor has an active layer (30) sensitive to pressure and/or to temperature.

6. Fingerprint-relading system according to Claim 5, **characterized In that** the active layer (30) of the integrated circuit is a pyro/piezoelectric layer enabling the sensing of a matrix pattern of pressure and/or temperature created by the fingerprint.

7. Fingerprint-reading system according to any one of Claims 1 to 4, **characterized in that** the sensitive elements of the sensor are constituted by capacitive elements enabling the sensing of the matrix pattern of capacitance created by the creases of the finger.

8. Fingerprint-reading system according to any one of Claims 4 to 7, **characterized in that** the sensitive element of the sensor is rectangular-shaped.

9. Fingerprint-reading system according to any one of Claims 1 to 8, **characterized in that** the surface area of the sensor is smaller than the surface area of the fingerprint and delivers only partial images of the complete fingerprint.

10. Fingerprint-reading system according to any one of Claims 1 to 9, **characterized in that** the sensor has the shape of a small bar with a length far smaller than its width

11. Fingerprint-reading system according to Claim 10, **characterized in that** the width of the small bar is substantially equal to that of a finger.

12. Fingerprint∼reading system according to either of Claims 10 and 11, **characterized in that** the sensor has an active surface whose width ranges from about 1cm to 2.5 centimetres and whose length is less than 5 millimetres.

13. Fingerptint-reading system according to any one of Claims 1 to 12, **characterized in that** the sensor comprises only one row of sensitive elements.

14. Fingerprint-reading system according to any one of Claims 1 to 13, **characterized in that** it comprises for the reconstruction of an image of a print (52), an electronic circuit with a microprocessor (60), a read-only memory (63) programmed with an algorithm enabling the reconstruction of the complete image of the print and the identification of the individual and a random access memory (61)

15. Fingerprint-reading system according to any one of Claims 1 to 14, **characterized in that** it comprises means of processing partial images provided by the sensor making it possible in particular to provide contours of fingerprint ridge lines, the image reconstruction means setting up on the basis of these contours a total fingerprint image in the form of contours.

16. Fingerprint-reading system according to Claim 15, **characterized in that** the means of processing partial images take account of the results preceding a new search for optimal superposition between two successive images to predict what the most probable position of overlapping for the next image will be by the fact that there is a very high probability that the relative shift of the finger with respect to the sensor will be substantially constant.

17. Fingerprint-reading system according to one of Claims 1 to 8, **characterized in that** the sensor (10, 50) comprises an active surface and a matrix of several rows for generating a series of overlapping successive partial images (I0, I1, I2, ...In) of the finger (11, 53) placed in contact with this active surface during the relative motion of sliding of the sensor and of the finger in contact between the active surface and the finger, this active surface being smaller than the surface of the fingerprint (52) to be read, the means of reconstruction comprising means of correlation of the successive overlaping partial images.

18. Fingerprint-reading process consisting in,
- obtaining a series of partial images of the fingerprint (52) during a relative motion of sliding of the sensor (50) and of the finger (53) in contact, the finger being placed in direct contact with an active surface of the sensor, the sensor having a smaller active surface than the surface of the fingerprint to be read, the active surface having several rows of sensitive elements, each partial image overlapping the previous partial image and,
- reconstructing an overall image by correlation of the overlapping partial images.
